# FASCICULE DE BREVET EUROPEEN

(11) **EP 1 582 701 B1**
(45) Date de publication et mention de la délivrance du brevet: **13.08.2008**
(21) Numéro de dépôt: 05102353.9
(22) Date de dépôt: 23.03.2005
(51) Int. Cl.: F01D 21/04

(54) **Structure d'entrée d'air pour moteur d'aéronef**
Lufteinlass-Struktur für ein Flugzeugtriebwerk
Air intake structure for an airplane engine

(30) Priorité: 29.03.2004 FR 0450612
(43) Date de publication de la demande: 05.10.2005
(73) Titulaire: AIRBUS France, 31060 Toulouse (FR)
(72) Inventeur: Porte, Alain, 31770, COLOMIERS (FR)
(74) Mandataire: Poulin, Gérard

(56) Documents cités:
- GB-A- 1 427 339
- US-B1- 6 328 258

## Description

### DOMAINE TECHNIQUE

L'invention concerne les nacelles susceptibles d'être utilisées pour tout type de moteur ou de turboréacteur, en particulier dans les aéronefs.

Plus précisément, l'invention se rapporte à la structure d'entrée d'air de la nacelle et à la rigidité des moyens de renfort situés à l'arrière.

### ÉTAT DE LA TECHNIQUE ANTÉRIEURE

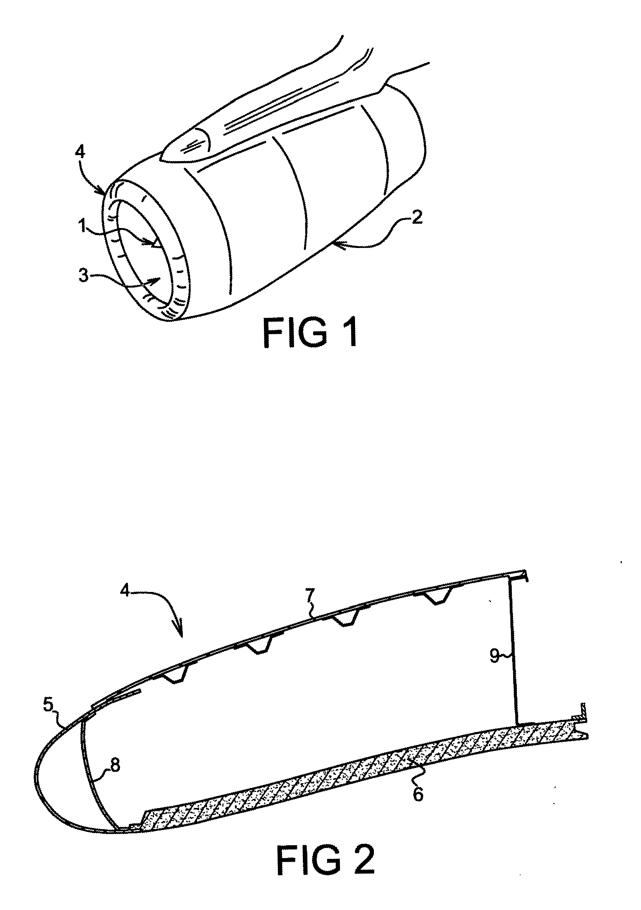

Comme représenté très schématiquement en perspective sur la figure 1 des dessins annexés, un moteur d'aéronef comprend une partie centrale 1, dans laquelle est logé le moteur proprement dit, ainsi qu'une partie annulaire 2, appelée nacelle, entourant de façon coaxiale la partie centrale du moteur, et délimitant avec celle-ci un canal annulaire 3 appelé canal de soufflante. Une soufflante, entraînée par la partie centrale 1 du moteur, est placée dans ce canal 3 au niveau des capots de soufflante.

La partie avant de la nacelle 2 constitue une structure d'entrée d'air 4. Cette structure a notamment pour fonction d'assurer l'écoulement aérodynamique de l'air d'une part vers le canal de soufflante 3, et d'autre part, vers l'extérieur de la nacelle 2. Une telle structure comprend habituellement une lèvre d'entrée d'air 5 (voir figure 2) qui est rapportée sur les enveloppes intérieure 6 et extérieure 7 de la nacelle 2. Par convention, en l'absence d'une précision contraire, les termes « intérieur » et « extérieur » seront utilisés pour désigner la position ou l'orientation des pièces par rapport au canal de soufflante de la structure d'entrée d'air.

De façon usuelle, l'enveloppe intérieure 6, c'est-à-dire du côté du canal de soufflante 3, en arrière de la lèvre d'entrée d'air 5, est constituée d'un panneau acoustique. Ce panneau présente une structure propre à atténuer les bruits produits par la partie centrale du moteur, et notamment par la soufflante. Dans la pratique, cette structure est habituellement de type composite sandwich, c'est-à-dire que le panneau 6 intègre une âme en nid d'abeille.

La lèvre d'entrée d'air 5 présente en section la forme d'un U ouvert vers l'arrière. Elle forme l'enveloppe extérieure de la partie avant de la structure d'entrée d'air. C'est elle qui assure le partage de l'air entre la partie qui pénètre dans le canal de soufflante et la partie qui s'écoule autour de la nacelle 2.

Pour renforcer la structure 4, un cadre de renfort avant 8 et un cadre de renfort arrière 9 peuvent traverser la structure entre les enveloppes intérieure et extérieure. Par convention, les termes « avant » et « arrière » seront utilisés dans l'ensemble du texte en prenant pour référence l'avant et l'arrière du moteur.

Le cadre de renfort avant 8 est placé à l'intérieur et à l'arrière de la lèvre d'entrée d'air 5, au niveau de l'extrémité d'entrée de la partie annulaire formée par les enveloppes 6 et 7. Le cadre de renfort arrière 9 est placé à l'intérieur de la nacelle 2, à proximité des capots de soufflante, à l'avant de la zone d'accrochage du moteur ; la zone d'accrochage du moteur se situe au niveau d'une zone de fixation entre l'entrée d'air et les capots de soufflante, mais de fait, extérieurement au panneau acoustique de l'enveloppe intérieure 6 dont elle détruirait les caractéristiques. Les cadres de renforts 8, 9 ont pour fonction d'assurer la tenue mécanique de la partie avant de la nacelle et d'aider à en préserver la forme et le dimensionnement. A cet effet, ils peuvent être fixés au moyen de rivets ou de vis, par exemple à la nacelle 2 ou, pour le cadre de renfort avant 8, directement à la lèvre d'entrée d'air 5.

Quelques exemples d'une telle structure d'entrée d'air sont illustrés dans le brevet américain US 6 328 258.

Lors de la mise au point d'un nouveau moteur d'aéronef, parmi les nombreux tests, un essai permet de vérifier que la structure environnante du moteur, qui englobe notamment la structure d'entrée d'air 4, est capable de résister à la rupture d'une pale de soufflante ou de la turbine du corps haute pression du moteur. La structure environnante, dans sa globalité, doit aussi pouvoir contenir le morceau de pale brisé afin qu'il n'aille pas endommager une partie vitale de l'aéronef.

Pour ce faire, un moteur est mis en fonctionnement, sur un banc de test au sol, dans les conditions les plus proches de son fonctionnement sur aéronef. Une pale de la soufflante est volontairement abîmée de manière à se briser pendant la rotation de la soufflante. Le morceau de pale qui a été sectionné est animé d'un mouvement de rotation centrifuge et percute les structures avoisinantes qui se déforment. En particulier, la structure d'entrée d'air 4 est animée d'un mouvement ondulatoire, mais elle se doit de résister.

A cet effet, le cadre de renfort arrière 9 permet d'augmenter la gamme de déformées de la structure d'entrée d'air 4 pour lesquelles la structure ne casse pas : grâce à sa souplesse, les efforts sont absorbés et le cadre permet ainsi d'éviter la dégradation de la structure d'entrée d'air en cas de rupture d'une pale de soufflante.

Cependant, jusqu'à présent, les pales de soufflante de moteur d'aéronef avaient des dimensions qui n'engendraient pas de trop fortes amplitudes du mouvement ondulatoire et donc, les déformées de la structure d'entrée d'air pouvaient être contenues dans des limites évitant la cassure. Avec l'arrivée de moteurs d'aéronefs à plus grand taux de dilution et/ou à diamètre de soufflante plus important (par exemple pour la motorisation d'aéronefs plus lourds de type gros porteurs), un morceau de pale de soufflante qui se serait cassée possède une énergie cinétique beaucoup plus forte : l'amplitude du mouvement ondulatoire engendré par un tel morceau entraîne des déformées des structures avoisinantes du moteur si conséquentes qu'elles provoquent la rupture des cadres de renfort arrière ou des composants sur lesquels ils sont fixés, et donc de la structure d'entrée d'air.

Les techniques actuelles ne permettent donc pas d'éviter les endommagements préjudiciables de ces structures.

### EXPOSÉ DE L'INVENTION

La présente invention a pour objet de pallier les inconvénients inhérents aux systèmes de renfort existants, notamment dans le cas où une pale de soufflante se sépare de la soufflante d'un moteur à grand taux de dilution ou de grand diamètre de soufflante. L'invention est définie dans les revendications.

Sous l'un de ses aspects, l'invention concerne une géométrie de moyens de renfort destinés à la structure d'entrée d'air pour un moteur d'aéronef telle que la fixation aux deux extrémités, de façon habituelle parallèles l'une à l'autre, des moyens de renfort ne les empêche pas de subir une déformation, par exemple et notamment de nature ondulatoire, voire élastique.

En particulier, un cadre de renfort selon l'invention possède une structure sensiblement plane entre une de ses extrémités et une zone d'inflexion de la courbure, de sorte que l'application d'une force dont une composante est perpendiculaire aux extrémités et dans ledit plan, c'est-à-dire une force radiale ou perpendiculaire à l'axe horizontal du moteur lorsque le cadre est monté dans une structure d'entrée d'air, engendre une déformation, de préférence élastique, du cadre de renfort entre son autre extrémité et la zone d'inflexion. De cette façon, la hauteur générale du cadre de renfort, déterminée par la projection de ses deux extrémités sur le plan, diminue, ce qui permet à des pièces attachées aux extrémités de se rapprocher temporairement. Ainsi, des déformées importantes des structures avoisinant les extrémités du cadre de renfort peuvent être compensées.

Il est préféré que la distance ainsi compensable soit au moins égale à 20 % de la hauteur totale du cadre de renfort. Il est possible que la longueur du plan soit minime, voire quasi-nulle.

Sous un autre aspect, l'invention se rapporte donc à un cadre de renfort qui définit en fonctionnement normal en coupe orthogonale aux sections d'extrémité une courbe régulière entre la première portion d'extrémité et la deuxième portion d'extrémité, la zone d'inflexion étant alors confondue avec la première portion d'extrémité.

Avantageusement, le cadre de renfort définit entre la zone d'inflexion et l'extrémité qui ne délimite pas le plan une surface de courbure régulière, et de préférence sensiblement sous forme d'arc de cercle en coupe radiale lorsqu'il est monté. Il est souhaitable que la tangente à la courbe au niveau de la deuxième extrémité soit perpendiculaire au plan, afin de faciliter la fixation.

Dans une structure d'entrée d'air comprenant une partie annulaire délimitée par une enveloppe intérieure et une enveloppe extérieure, les moyens de renfort, ou cadre de renfort, sont solidarisés à une de leurs extrémités à l'enveloppe intérieure et à l'autre extrémité à l'enveloppe extérieure, la distance entre les deux enveloppes étant la hauteur au repos du cadre de renfort, dont le plan est généralement perpendiculaire aux deux enveloppes. Ainsi, la structure d'entrée d'air peut subir une déformée équivalente à la distance séparant la zone d'inflexion de la deuxième extrémité, ou une succession de telles déformées, les deux enveloppes se rapprochant sans rupture des moyens de renfort.

Avantageusement, l'extrémité fixée sur l'enveloppe intérieure est plus en arrière que celle sur l'enveloppe extérieure. De préférence, l'extrémité fixée sur l'enveloppe intérieure est fixée à la zone d'accrochage du moteur, si possible sur la plaque de fixation permettant de fixer le moteur.

Les moyens de renfort peuvent être en métal, par exemple en titane, ou matériau composite ; avantageusement, ils sont fixés par l'intermédiaire de rivets ou de vis.

### BRÈVE DESCRIPTION DES DESSINS

Les figures annexées permettront de mieux comprendre l'invention, mais ne sont données qu'à titre indicatif et ne sont nullement restrictives.

La figure 1, déjà décrite, montre un moteur d'aéronef.

La figure 2, déjà décrite, est une vue en coupe longitudinale représentant une première technique de réalisation connue d'une structure d'entrée d'air qui illustre les renforts existants.

La figure 3 montre en détails en coupe longitudinale un cadre de renfort arrière connu.

Les figures 4 montrent, en coupe longitudinale, un cadre de renfort arrière conforme à l'invention, dans une structure d'entrée d'air au repos (figure 4a) ou ayant subi une déformée (figure 4b).

### EXPOSÉ DÉTAILLÉ DE MODES DE RÉALISATION PARTICULIERS

Tel que précisé plus haut, les moyens de renfort arrière 9 permettent de maintenir la structure d'entrée d'air 4 en état lors de sollicitations mécaniques. Par ailleurs, grâce à leur souplesse, ils peuvent faire face à certaines déformées de la structure d'entrée d'air 4, et permettent ainsi d'éviter sa dégradation en cas de rupture d'une pale de soufflante.

La description des figures se fera principalement en référence à la vue en coupe longitudinale de la structure d'entrée d'air, où par exemple les extrémités sont représentées par des points. Il faut cependant comprendre que les cadres de renforts sont localisés dans l'espace annulaire 3 des nacelles 2. En vue de face de la structure d'entrée d'air 4, ils peuvent présenter la forme d'anneaux (dont le diamètre intérieur est délimité par la deuxième extrémité), ou un profil trapézoïdal (issu d'une coupe des anneaux) dont les côtés parallèles sont des arcs de cercle définis par les portions d'extrémité. A cet égard, bien que les portions d'extrémité puissent être qualifiées de « concentriques », notamment dans le cas des anneaux, le terme « parallèles » sera préféré et utilisé par la suite : il recoupe la même notion que *« toute normale à l'une des courbes est une normale à l'autre* », tout en étant plus facilement vérifiable dans le cas d'arcs de cercle d'angle restreint : les extrémités des cadres de renfort existants peuvent avoir une largeur de l'ordre de 15-20 cm, pour un diamètre de l'enveloppe intérieure très supérieur.

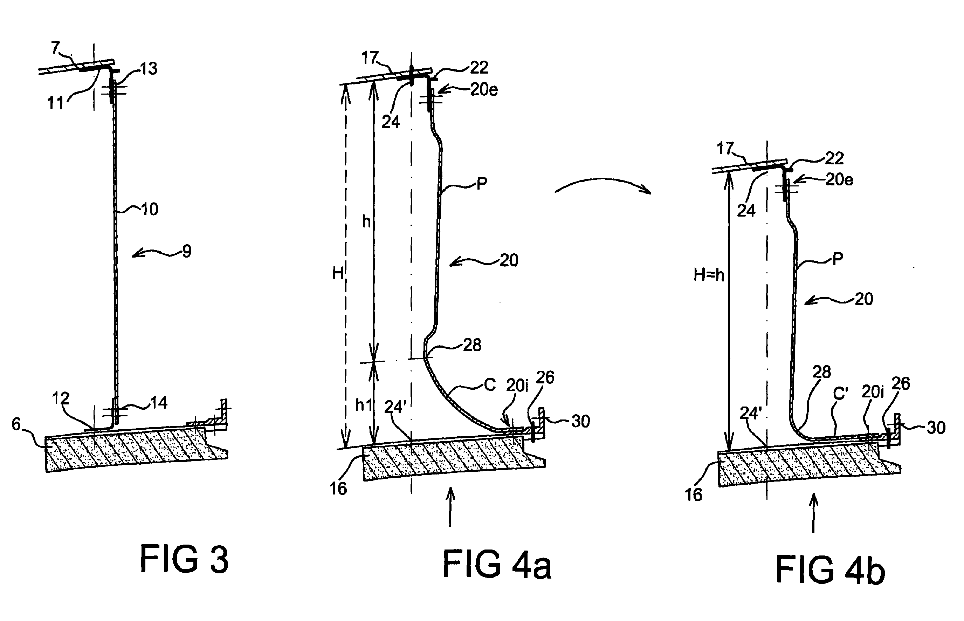

Comme illustré sur la figure 3, une des géométries possibles pour les moyens de renfort 9 comporte un cadre de renfort 10 proprement dit associé à des moyens de fixation 11, 12. A chacune des extrémités du cadre de renfort arrière 10, deux parties d'attache 13, 14 sont destinées à être solidarisées, en particulier par rivets, aux moyens de fixation 11, 12 respectivement, qui eux-mêmes sont solidarisés, également par rivets par exemple, respectivement aux enveloppes extérieure 7 et intérieure 6 de la structure d'entrée d'air 4, représentée partiellement sur cette figure. L'ensemble des moyens de renfort 9, en coupe, est quasi-rectiligne de sorte que les moyens de fixation, ou points d'attache, 11 et 12 sont presque l'un en face de l'autre selon une normale à l'enveloppe intérieure 6 : le plan défini par le cadre de renfort 10 est de préférence orthogonal aux enveloppes 6, 7 afin d'assurer un maintien maximal de la forme générale de la structure d'entrée d'air 4.

Par ailleurs, la forme générale du cadre de renfort 10, et en particulier sa faible épaisseur par rapport à sa longueur, lui procure une certaine souplesse, ce qui lui permet de reprendre des déformées de l'enveloppe intérieure 6 engendrées par la faible amplitude d'un mouvement ondulatoire causé par la rupture d'un pale de soufflante.

Pour améliorer la souplesse de l'ensemble 9 et surtout éviter, en cas de déformée trop importante de l'enveloppe 6, une rupture du cadre de renfort 10 qui serait préjudiciable et pourrait causer des dégâts supplémentaires aux enveloppes, classiquement, il a été proposé d'introduire des fixations 11, 12 fusibles pour limiter la détérioration du cadre de renfort 10 ou du panneau acoustique composant l'enveloppe interne 6.

Selon l'invention, il a été trouvé qu'il était possible de modifier la géométrie du cadre de renfort 10 lui-même, sans en altérer les propriétés de maintien de façon incompatible avec son utilisation. En particulier, il a été montré qu'une partie du cadre de renfort au moins pouvait ne pas être orthogonale aux enveloppes intérieure et extérieure, ce qui permet de donner audit cadre de renfort une souplesse de mouvement qu'il n'atteint pas si ses deux extrémités sont situées selon un plan.

La figure 4a représente schématiquement une structure d'entrée d'air comprenant un cadre de renfort 20 conforme à l'invention. Sur cette figure, analogue à la figure 3 sauf pour la structure de renfort, la nacelle 2 n'a également été que partiellement dessinée et le cadre de renfort est localisé à l'arrière. Il apparaîtra plus clairement par la suite que cette alternative est préférée, mais que le cadre de renfort de l'invention peut être localisé en d'autres endroits de la structure d'entrée d'air. Par contre, il ne s'agit pas d'un élément de renforcement de la lèvre d'entrée d'air 5 en tant que telle : un tel élément, présenté par exemple dans le document US 6 328 258, assure la rigidité et le maintien des formes et dimensions de la partie avant de la nacelle 2 en cas de chocs frontaux, par exemple des oiseaux, et il est, par principe, massif et conçu pour ne pas être compressible, contrairement au cadre selon l'invention.

Le cadre de renfort arrière 20 est fixé, au niveau de sa portion d'extrémité externe 20e, plus généralement appelée extrémité, en haut sur la figure, par l'intermédiaire d'une plaque métallique de fixation 22, par des premiers moyens de fixation 24, à l'enveloppe extérieure 17 de la nacelle, sur sa partie arrière. Dans ce mode de réalisation illustré, la solidarisation entre cadre de renfort 20 et enveloppe extérieure 17 est effectuée par une plaque métallique de fixation 22 qui est solidarisée à l'enveloppe extérieure par rivets 24, et sur laquelle l'extrémité externe 20e du cadre de renfort 20 est solidarisée par tout moyen connu de l'homme du métier, par exemple également par rivets. Il est clair que ce mode de réalisation n'est qu'une des alternatives envisageables, illustrée ici par analogie avec la figure 3. Toute fixation existante et déjà utilisée pour ce type d'application est bien entendu envisageable, ainsi que les alternatives connues de l'homme du métier.

Par ailleurs, le cadre de renfort 20 est fixé, au niveau de son extrémité interne, ou basse, 20i, par des deuxièmes moyens de fixation 26 à la partie arrière de l'enveloppe intérieure 16 de la structure d'entrée d'air de la nacelle 2. Ces deuxièmes moyens de fixation peuvent être constitués de toutes les alternatives présentées ci-dessus pour les premiers moyens de solidarisation 22, 24, et l'extrémité interne 20i ne doit pas non plus être interprétée comme la ligne de section mais plutôt comme une portion délimitant le bout du cadre.

Pour permettre de réaliser la modification de géométrie préconisée par l'invention, le cadre de renfort 20 présente une zone ou portion d'inflexion 28 située à une première longueur h de la première extrémité, ici l'extrémité externe, 20e du cadre. Sur cette première longueur h, le cadre de renfort 20 définit sensiblement un premier plan P. Lors du montage sur la structure d'entrée d'air 4, et de façon similaire aux cadres de renfort 10 connus, le premier plan P est sensiblement orthogonal aux enveloppes intérieure 16 et extérieure 17 de la structure d'entrée d'air et forme une partie de la hauteur séparant les deux enveloppes.

Par contre, la zone d'inflexion 28, avantageusement sous forme d'une ligne parallèle aux lignes délimitant les extrémités 20e et 20i du cadre en vue de face de la structure d'entrée d'air 4, définit un changement de direction pour le cadre de renfort 20 et une rupture de plan : en coupe longitudinale, la partie du cadre de renfort 20 localisée entre le point d'inflexion 28 et la deuxième extrémité 20i n'est plus rectiligne mais courbe, tel qu'illustré sur la figure 4a. La longueur du cadre de renfort 20 entre la deuxième extrémité 20i et le point d'inflexion 28 est donc supérieure à la hauteur h1 séparant ce point d'inflexion 28 de la projection normale sur le plan P de la deuxième extrémité 20i. Pour un tel cadre de renfort 20, la distance, ou hauteur, H séparant les enveloppes intérieure 16 et extérieure 17 de la structure d'entrée d'air 4 sur laquelle il est monté, est donc de l'ordre de h + h1, distance inférieure à la longueur totale du cadre de renfort 20 mesurée le long de sa surface.

Lors d'une contrainte, et notamment d'une compression, du cadre de renfort 20 dans la direction radiale à la structure d'entrée d'air 4 (selon les flèches des figures 4), la présence de la portion d'inflexion 28 permet un écrasement de la courbe C et une accentuation de l'inflexion. La hauteur H définie par le cadre diminue donc, et, à l'extrême, peut atteindre la première longueur h du plan P : dans ce cas illustré sur la figure 4b, il y a écrasement complet de la courbe C pour atteindre un quasi-plan C' perpendiculaire au plan P, qui conserve sa forme.

Un tel cadre de renfort 20 permet donc par exemple de compenser des déformées de l'enveloppe intérieure 16 d'une amplitude pouvant atteindre h1, c'est-à-dire telles que la distance H séparant les deux enveloppes diminue jusque h au niveau des premiers moyens de fixation 24. Avantageusement, il reprend ensuite sa forme de fonctionnement normal ; en particulier, un mouvement ondulatoire dû à la présence d'objets dans le canal de soufflante 3 est toléré par l'enveloppe intérieure 16 qui reprend sa forme lorsque le mouvement ondulatoire s'arrête.

Il est possible que la partie courbe C des moyens de renfort 20 ait une forme quelconque, mais il est préféré qu'elle soit régulière. De même, si la forme d'un U est par exemple envisageable, il est préféré pour éviter tout risque de cassure, que l'extrémité interne 20i soit le point de la courbe C le plus éloigné de la projection orthogonale du point d'inflexion 28 sur l'enveloppe intérieure 16, par exemple grâce à une courbe C sous la forme sensiblement d'un arc de cercle. Afin de faciliter la connexion du cadre de renfort 20 avec l'enveloppe intérieure 16, il est avantageux que la tangente à la courbe C au niveau de la deuxième extrémité 20i soit perpendiculaire au premier plan P, c'est-à-dire parallèle à l'enveloppe 16.

Avantageusement, afin d'assurer un bon compromis entre la gamme de déformées que l'on peut compenser et un maintien correct entre les deux enveloppes, il est souhaitable que la hauteur h1 compensable soit de l'ordre de 20 % de la distance H = h + h1 entre les deux enveloppes. Il est cependant possible que la longueur h du plan P soit inférieure à 80 % de la hauteur H séparant les enveloppes 16, 17, voire qu'elle soit proche de zéro, avec dans ce cas un cadre de renfort 20 essentiellement courbe C.

Il est préféré que l'aplatissement de la courbe C et la compensation de la déformée s'effectuent vers l'arrière du plan P, c'est-à-dire que la projection 24' des premiers moyens de fixation sur l'enveloppe intérieure 16 soit localisée entre la deuxième extrémité 20i du cadre de renfort 20 et l'entrée de la structure.

Par ailleurs, la structure d'entrée d'air 4 et le moteur sont habituellement solidarisés par l'intermédiaire d'une plaque de fixation métallique 30. Il est alors avantageux que les deuxièmes moyens de fixation 26 du cadre de renfort arrière 20 bénéficient de l'emplacement de cette fixation et que l'extrémité interne 20i du cadre de renfort arrière 20 soit solidarisée à la fixation métallique 30 présente, le décalage existant entre cette plaque de fixation 30 et la projection normale 24' du point d'ancrage 24 sur l'enveloppe intérieure 16 étant compensé par la forme du cadre arrière 20 selon l'invention. En outre, cette alternative permet une liaison métal-métal entre le rivet 26 et la fixation 30 qui ne produit pas de couple galvanique pouvant détériorer lesdites fixations. L'emplacement de la plaque de fixation 30 permet, de plus, de ne pas perforer le panneau acoustique 16, permettant ainsi de conserver son intégrité et ses qualités acoustiques.

Dans cet exemple de réalisation illustré sur la figure 4, la plaque de fixation métallique 30 a la forme d'un « L » couché. Il est bien entendu que cette fixation peut avoir différentes formes sans sortir du cadre de l'invention. De même, l'exemple représenté concerne un cadre arrière de renfort 20 dérivé de celui 10 illustré dans la figure 3. Il est clair que d'autres modes de réalisation sont envisageables, l'invention s'appliquant avec les mêmes avantages : la deuxième extrémité délimitant la partie courbe C du cadre de renfort peut ainsi être solidarisée à l'enveloppe extérieure de la structure d'entrée d'air.

## Revendications

1. Cadre de renfort (20) pour structure d'entrée d'air (4) pour un moteur d'aéronef comprenant une première et une deuxième portions d'extrémité (20e, 20i) et une portion intermédiaire (28), la portion intermédiaire étant localisée entre les première (20e) et deuxième portions d'extrémité (20i) à une première longueur (h) de la première portion d'extrémité (20e), le cadre définissant sensiblement un premier plan (P) entre la première portion d'extrémité (20e) et la portion intermédiaire (28), **caractérisé en ce que** la portion intermédiaire (28) est une zone d'inflexion telle que la courbure du cadre (20) entre la portion intermédiaire (28) et la deuxième portion d'extrémité (20i) soit non nulle, **en ce que** la première et la deuxième portions d'extrémité sont sensiblement perpendiculaires l'une à l'autre, et **en ce que** la hauteur (H) du cadre de renfort (20) définie entre la première portion d'extrémité (20e) et la projection normale de la deuxième portion d'extrémité (20i) sur le premier plan (P) soit comprise entre une première hauteur (h + hl) et, lorsque le cadre de renfort (20) est compressé par une force ayant une composante qui est perpendiculaire à la direction de la deuxième portion d'extrémité (20i) et dans le premier plan (P), une deuxième hauteur inférieure à la première hauteur et supérieure ou égale à la première longueur (h).

2. Cadre de renfort selon la revendication 1 dans lequel la différence (h1) entre les première et deuxième hauteurs est de l'ordre de 20 % au moins de la hauteur (H) du cadre de renfort (20) au repos.

3. Cadre selon l'une des revendications 1 à 2 dans lequel le cadre de renfort (20) définit au repos en coupe orthogonale aux portions d'extrémité (20e, 20i) une courbe régulière (C) entre la deuxième portion d'extrémité (20i) et la portion d'inflexion (28).

4. Cadre selon la revendication 3 dans lequel la tangente à la courbe (C) au niveau de la deuxième portion d'extrémité (20i) est perpendiculaire au premier plan (P).

5. Cadre de renfort (20) pour structure d'entrée d'air (4) pour un moteur d'aéronef comprenant une première et une deuxième portions d'extrémité (20e, 20i), dans lequel le cadre de renfort (20) définit une courbe régulière (C) entre la première et la deuxième portions d'extrémité et dans lequel le cadre de renfort (20) est compressible par une force ayant une composante dans la direction de la deuxième portion d'extrémité (20i) vers la première portion d'extrémité (20e) **caractérisé en ce que** la première et la deuxième portions d'extrémité sont sensiblement perpendiculaires l'une à l'autre.

6. Structure d'entrée d'air pour un moteur d'aéronef comprenant une partie annulaire définissant un canal de soufflante (3) qui comporte une extrémité d'entrée, une enveloppe extérieure (17) et une enveloppe intérieure (16), et un cadre de renfort (20) selon l'une des revendications 1 à 4 dont la première portion d'extrémité (20e) est solidarisée à l'enveloppe extérieure (17) par un premier moyen de fixation (24) et la deuxième portion d'extrémité (20i) est solidarisée à l'enveloppe intérieure (16) par un deuxième moyen de fixation (26), les enveloppes intérieure et extérieure (16, 17) étant séparées de la hauteur (H) du cadre de renfort (20) en fonctionnement normal.

7. Structure selon la revendication 6 dans laquelle la projection (24') selon le premier plan (P) du premier moyen de fixation (24) sur l'enveloppe intérieure (16) est située entre l'extrémité d'entrée de la partie annulaire et le deuxième moyen de fixation (26).

8. Structure d'entrée d'air pour un moteur d'aéronef comprenant une partie annulaire définissant un canal de soufflante (3) qui comporte une extrémité d'entrée, une enveloppe extérieure (17) et une enveloppe intérieure (16), et un cadre de renfort (20) selon la revendication 5 dont la première portion d'extrémité (20e) est solidarisée à l'enveloppe extérieure (17) par un premier moyen de fixation (24) et la deuxième portion d'extrémité (20i) est solidarisée à l'enveloppe intérieure (16) par un deuxième moyen de fixation (26), la projection normale du premier moyen de fixation (24) sur l'enveloppe intérieure (16) étant située entre l'extrémité d'entrée de la partie annulaire et le deuxième moyen de fixation (26).

9. Structure selon l'une des revendications 6 à 8 dans laquelle le cadre de renfort (20) est solidarisé aux enveloppes par l'intermédiaire de rivets (24, 26).

10. Structure selon l'une des revendications 6 à 9 dans laquelle l'enveloppe intérieure (16) est formée d'un panneau acoustique.

11. Structure selon l'une des revendications 6 à 10 dans laquelle le cadre de renfort (20) est localisé au niveau d'une zone d'accrochage du moteur, distante de l'extrémité d'entrée de la partie annulaire.

12. Structure selon la revendication 11 dans laquelle l'enveloppe intérieure (16) comporte une plaque de fixation métallique (30) pour fixer le moteur, et dans laquelle la deuxième portion d'extrémité (20i) du cadre de renfort (20) est solidarisée sur la plaque de fixation (30).

## Claims

1. Stiffening frame (20) for an air intake structure (4) for an aircraft engine, comprising a first end portion and a second end portion (20e, 20i), and an intermediate portion (28), the intermediate portion being located between the first (20e) and second (20i) end portions at a first length (h) from the first end portion (20e), the frame approximately defining a first plane (P) between the first end portion (20e) and the intermediate portion (28), **characterized in that** the intermediate portion (28) is an inflection area such that the curvature of the frame (20) between the intermediate portion (28) and the second end portion (20i) is zero, **in that** the first (20e) and second (20i) end portions are approximately orthogonal to each other, and **in that** the height (H) of the stiffening frame (20) defined between the first end portion (20e) and the normal projection of the second end portion (20i) onto the first plane (P) being between a first height (h+h1) and, when the stiffening frame (20) is compressed by a force with a component perpendicular to the direction of the second end portion (20i) and in the first plane (P), a second height less than the first height and equal or greater to the first length (h).

2. Stiffening frame according to claim 1, in which the difference (h1) between the first and second heights is of the order of at least 20% of the stiffening frame height (H) when at rest.

3. Frame according to claim 1 or 2, in which the stiffening frame (20) defines a regular curve at the end portions (20e, 20i) between the second end portion (20i) and the inflection portion (28), at rest and along an orthogonal section.

4. Frame according to claim 3, in which the tangent to the curve (C) at the second end portion (20i) is perpendicular to the first plane (P).

5. Stiffening frame (20) for an air intake structure (4) for an aircraft engine, comprising a first and a second end portions (20e, 20i), in which the stiffening frame (20) defines a regular curve (C) between the first and a second end portions and in which the stiffening frame is compressible by a force with a component in the direction of the second end portion (20i) towards the first end portion (20e), **characterized in that** the first and second end portions are approximately orthogonal to each other.

6. Air intake structure for an aircraft engine, comprising an annular part defining a fan duct (3) which comprises an intake end, an outer casing (17), an inner casing (16), and a stiffening frame (20) according to one of claims 1 or 4, the first end portion (20e) of which is fixed to the outer casing (17) through a first fastening element (24) and the second end portion (20i) is fixed to the inner casing (16) through a second fastening element (26), the inner and outer casings (16, 17) being separated by the height (H) of the stiffening frame (20) under normal operation.

7. Structure according to claim 6, in which the projection (24') according to the first plane (P) of the first fastening element (24) onto the inner casing (16) is located between the intake end of the annular part and the second fastening element (26).

8. Air intake structure for an aircraft engine, comprising an annular part defining a fan duct (3) which comprises an intake end, an outer casing (17) and an inner casing (16), and a stiffening frame (20) according to claim 5, the first end portion (20e) of which is fixed to the outer casing (17) through a first fastening element (24) and the second end portion (20i) is fixed to the inner casing (16) through a second fastening element (26), the normal projection of the first fastening element (24) onto the inner casing (16) being between the intake end of the annular part and the second fastening element (26).

9. Structure according to any one of claims 6 to 8 in which the stiffening frame (20) is fixed to the casings using rivets (24,26).

10. Structure according to any one of claims 6 to 9 in which the inner casing (16) is composed of a sound proofing panel.

11. Structure according to any one of claims 6 to 10 in which the stiffening frame (20) is located at an attachment area of the engine, remote from the intake end of the annular part.

12. Structure according to claim 11 in which the inner casing (16) comprises a metallic attachment plate (30) to fasten the engine, and in which the second end portion (20i.) of the stiffening frame (20) is fixed onto the attachment plate (30).

## Patentansprüche

1. Verstärkungsrahmen (20) für Lufteintrittsstruktur (4) für einen Luftfahrzeugsmotor umfassend einen ersten Endabschnitt und einen zweiten Endabschnitt (20e, 20i) und einen Zwischenabschnitt (28), wobei der Zwischenabschnitt zwischen dem ersten Endabschnitt (20e) und dem zweiten Endabschnitt (20i) in einer ersten Länge (h) des ersten Endabschnitts (20e) lokalisiert ist, wobei der Rahmen im Wesentlichen eine erste Ebene (P) zwischen dem ersten Endabschnitt (20e) und dem Zwischenabschnitt (28) definiert, **dadurch gekennzeichnet, dass** der Zwischenabschnitt (28) derart eine Wendezone ist, dass die Wölbung des Rahmens (20) zwischen dem Zwischenabschnitt (28) und dem zweiten Endabschnitt (20i) nicht Null ist, **dadurch** dass der erste Endabschnitt und der zweite Endabschnitt im Wesentlichen senkrecht zueinander sind, und **dadurch** dass die Höhe (H) des Verstärkungsrahmens (20), die zwischen dem ersten Endabschnitt (20e) und der normalen Projizierung des zweiten Endabschnitts (20i) auf der ersten Ebene (P) definiert ist, zwischen einer ersten Höhe (h + h1) und, wenn der Verstärkungsrahmen (20) durch eine Kraft mit einer Komponente, die senkrecht zur Richtung des zweiten Endabschnitts (20i) und in der ersten Ebene (P) ist, komprimiert ist, und einer zweiten Höhe, die kleiner als die erste Höhe und größer als oder gleich die erste Länge (h) ist, liegt.

2. Verstärkungsrahmen nach Anspruch 1, in dem die Differenz (h1) zwischen der ersten Höhe und der zweiten Höhe zumindest bei 20% von der Höhe (H) des Verstärkungsrahmens (20) in der Ruhestellung liegt.

3. Rahmen nach einem der Ansprüche 1 bis 2, in dem der Verstärkungsrahmen (20) in der Ruhestellung im orthogonalen Schnitt an den Endabschnitten (20e, 20i) eine regelmäßige Wölbung (C) zwischen dem zweiten Endabschnitt (20i) und dem Wendeabschnitt (28) definiert.

4. Rahmen nach Anspruch 3, in dem die Tangente der Wölbung (C) auf Ebene des zweiten Endabschnitts (20i) senkrecht zur ersten Ebene (P) ist.

5. Verstärkungsrahmen (20) für Lufteintrittsstruktur (4) für einen Luftfahrzeugsmotor umfassend einen ersten Endabschnitt und einen zweiten Endabschnitt (20e, 20 i), in dem der Verstärkungsrahmen (20) eine regelmäßige Wölbung (C) zwischen dem ersten Endabschnitt und dem zweiten Endabschnitt definiert, und in dem der Verstärkungsrahmen (20) durch eine Kraft, die eine Komponente in der Richtung des zweiten Endabschnitts (20i) zum ersten Endabschnitt (20e) hat, kompressibel ist, **dadurch gekennzeichnet, dass** der erste Endabschnitt und der zweite Endabschnitt im Wesentlichen senkrecht zueinander sind.

6. Lufteintrittsstruktur für ein Luftfahrzeugsmotor umfassend einen ringförmigen Teil, der einen Gebläsekanal (3) definiert, der ein Eintrittsende, eine äußere Hülle (17) und eine innere Hülle (16), und einen Verstärkungsrahmen (20) nach einem der Ansprüche 1 bis 4 umfasst, von dem der erste Endabschnitt (20e) durch ein erstes Befestigungsmittel (24) mit der äußeren Hülle (17) verbunden ist und von dem der zweite Endabschnitt (20i) durch ein zweites Befestigungsmittel (26) mit der inneren Hülle (16) verbunden ist, wobei die innere Hülle und die äußere Hülle (16, 17) von der Höhe (H) des Verstärkungsrahmens (20) im Normalbetrieb getrennt sind.

7. Struktur nach Anspruch 6, in der die Projizierung (24') nach der ersten Ebene (P) des ersten Befestigungsmittels (24) auf der inneren Hülle (16) zwischen dem Eintrittsende des ringförmigen Teils und dem zweiten Befestigungsmittel (26) liegt.

8. Lufteintrittsstruktur für ein Luftfahrzeugsmotor umfassend einen ringförmigen Teil, der einen Gebläsekanal (3) definiert, der ein Eintrittsende, eine äußere Hülle (17) und eine innere Hülle (16), und einen Verstärkungsrahmen (20) nach Anspruch 5 umfasst, von dem der erste Endabschnitt (20e) durch ein erstes Befestigungsmittel (24) mit der inneren Hülle (17) verbunden ist und von dem der zweite Endabschnitt (20i) durch ein zweites Befestigungsmittel (26) mit der inneren Hülle (16) verbunden ist, wobei die normale Projizierung des ersten Befestigungsmittels (24) auf der inneren Hülle (16) zwischen dem Eintrittsende des ringförmigen Teils und dem zweiten Befestigungsmittel (26) liegt.

9. Struktur nach einem der Ansprüche 6 bis 8, in der der Verstärkungsrahmen (20) mit Hilfe von Nieten (24, 26) mit den Hüllen verbunden ist.

10. Struktur nach einem der Ansprüche 6 bis 9, in der die innere Hülle (16) durch eine Akustikplatte gebildet ist.

11. Struktur nach einem der Ansprüche 6 bis 10, in der der Verstärkungsrahmen (20) auf der Ebene einer Aufhängezone des Motors, die vom Eintrittsende des ringförmigen Teils distanziert ist, lokalisiert ist.

12. Struktur nach Anspruch 11, in der die innere Hülle (16) eine Metallbefestigungsplatte (30) umfasst, um den Motor zu befestigen, und in der der zweite Endabschnitt (20i) des Verstärkungsrahmens (20) auf der Befestigungsplatte (30) verbunden ist.
